# EUROPEAN PATENT APPLICATION

(11) **EP 3 537 272 A1**
(43) Date of publication of application: **11.09.2019**
(21) Application number: 17873792.0
(22) Date of filing: 24.01.2017
(51) Int. Cl.: G06F 3/048

(54) **INFORMATION PROCESSING METHOD, POSITIONING CHIP, AND MOBILE TERMINAL**

(30) Priority: 23.11.2016 CN 201611049301
(71) Applicant: Huawei Technologies Co., Ltd., Longgang District Shenzhen, Guangdong 518129 (CN)
(72) Inventor: YANG, Jun, Shenzhen Guangdong 518129 (CN); KONG, Zhengrong, Shenzhen Guangdong 518129 (CN); ZHOU, Yuehai, Shenzhen Guangdong 518129 (CN)
(74) Representative: Maiwald Patent- und Rechtsanwaltsgesellschaft mbH
(86) International application number: PCT/CN2017/072444
(87) International publication number: WO 2018/094875

(57) **Abstract**

The present invention provides an information processing method, a positioning chip, and a mobile terminal. The method includes: receiving, by a positioning chip, control information sent by a main chip, where the positioning chip and the main chip are disposed in a same mobile terminal, and the control information includes a preset location; obtaining a current location based on the control information, and determining whether the current location matches the preset location; and when the current location matches the preset location, sending, by the positioning chip, a directive command to the main chip, so that after the main chip receives the directive command, the main chip performs a preset operation according to the directive command. In this method, the positioning chip monitors the current location, and sends the directive command instead of the current location to the main chip when the current location matches the preset location, to trigger the main chip to perform the preset operation, thereby preventing an application in the main chip from obtaining location information of the mobile terminal, and protecting user information security.

## Description

### TECHNICAL FIELD

The present invention relates to the field of computer technologies, and in particular, to an information processing method, a positioning chip, and a mobile terminal.

### BACKGROUND

With rapid development of computer technologies, mobile terminals such as a smartphone, a tablet computer, and a wearable device such as a smart band or smart glasses bring great convenience to people's life and work. There is usually a case in which a user gets off at a wrong stop or misses a stop when taking public transportation. A location reminder may be set in a mobile terminal to monitor a current location of a user, so that when the user of the mobile terminal reaches a destination, prompt information is output to remind the user to get off.

However, in the prior art, during user location monitoring, a positioning system usually needs to be enabled to obtain a current location, and an application in the mobile terminal, such as Alipay, Dianping, or WeChat, can also obtain the current location and push information to a user based on location information. Consequently, personal information is leaked.

### SUMMARY

Embodiments of the present invention provide an information processing method, a positioning chip, and a mobile terminal, so that the positioning chip monitors a current location, and sends a directive command instead of the current location to a main chip when the current location matches a preset location, to trigger the main chip to perform a preset operation, thereby preventing an application in the main chip from obtaining location information of the mobile terminal, and protecting user information security.

According to a first aspect, an embodiment of the present invention provides an information processing method, including: receiving, by a positioning chip, control information sent by a main chip, where the control information includes a preset location; obtaining, by the positioning chip, a current location based on the control information, and determining whether the current location matches the preset location; and when the current location matches the preset location, sending a directive command to the main chip, so that after the main chip receives the directive command, the main chip performs a preset operation according to the directive command, where the positioning chip and the main chip are disposed in a same mobile terminal.

In this embodiment of the present invention, the main chip sends the control information including the preset location to the positioning chip, and the positioning chip monitors whether the current location matches the preset location, and sends the directive command to the main chip when the current location matches the preset location, to trigger the main chip to perform the preset operation, thereby preventing an application in the main chip from obtaining location information, and protecting user information security.

With reference to the first aspect, in a first implementation of the first aspect, the control information includes instruction information, the instruction information is used to instruct the main chip to perform the preset operation, and the directive command comprises the instruction information.

With reference to the first aspect, in a second implementation of the first aspect, the control information is a message sent by the main chip using a first application, the control information further includes an identifier of the first application, and an implementation of the obtaining, by the positioning chip, a current location based on the control information may be: obtaining, by the positioning chip, a permission application list, where the permission application list includes an identifier of at least one application that has permission to obtain the current location using the positioning chip; and when the identifier of the first application is an item in the permission application list, obtaining, by the positioning chip, the current location based on the control message. In this way, an application that can invoke the positioning chip is limited, so that only an allowed application can invoke a program in the positioning chip, and user information security is further protected.

With reference to the first aspect, in a third implementation of the first aspect, the control information further includes a time condition, and an implementation of the obtaining, by the positioning chip, a current location based on the control information may be: when a current time meets the time condition, obtaining, by the positioning chip, the current location based on the control information, so that the mobile terminal performs the preset operation within a specified time range, thereby meeting diversified user requirements and improving user experience.

With reference to the first aspect and the first to the third implementations of the first aspect, in a fourth implementation of the first aspect, the positioning chip is a GPS chip, and an implementation of the obtaining, by the positioning chip, a current location based on the control information may be: obtaining, by the positioning chip, the current location based on the control information using a GPS.

With reference to the first aspect and the first to the third implementations of the first aspect, in a fifth implementation of the first aspect, the positioning chip is a modem chip, and an implementation of the obtaining, by the positioning chip, a current location based on the control information may be: obtaining, by the positioning chip, the current location based on the control information using a base station positioning system.

With reference to the first aspect and the first to the fifth implementations of the first aspect, in a sixth implementation of the first aspect, the preset operation may include: waking up a system in the main chip; and/or outputting prompt information that is used to indicate that the current location is the preset location.

In this embodiment of the present invention, after sending the control information, the main chip may enter a sleeping state, and when receiving the directive command sent by the positioning chip, the main chip wakes up the system in the main chip, so that power consumption of the mobile terminal can be reduced. In addition, after receiving the directive command sent by the positioning chip, the main chip may output the prompt information, to notify a user of an electronic terminal that the current location is the preset location, and when the user of the mobile terminal arrives at the specified preset location, the main chip may prompt the user. In this way, user experience is improved.

Optionally, the preset operation may alternatively be starting a preset application program, sending a message to a target contact, or the like. This is not limited in the present invention.

According to a second aspect, an embodiment of the present invention further provides a positioning chip. The positioning chip may include a functional unit configured to perform the information processing method according to the first aspect.

According to a third aspect, an embodiment of the present invention further provides a positioning chip. The positioning chip may include a first processor, a first memory, and a positioning module, where the first memory is configured to store a program and data, and the first processor is configured to invoke the program in the first memory to perform the information processing method according to any implementation of the first aspect.

According to a fourth aspect, an embodiment of the present invention further provides a mobile terminal. The mobile terminal may include:
a generation unit, configured to generate control information based on a received preset location, where the control information includes the preset location;
a first sending unit, configured to send the control information to a positioning chip, where the control information includes the preset location;
a first receiving unit, configured to receive the control information sent by a main chip;
an obtaining unit, configured to obtain a current location based on the control information;
a determining unit, configured to determine whether the current location matches the preset location;
a second sending unit, configured to: when the current location matches the preset location, send a directive command to the main chip;
a second receiving unit, configured to receive the directive command; and
an execution unit, configured to perform a preset operation according to the directive command, where
the positioning chip and the main chip are separately disposed in a same mobile terminal.

In an embodiment of the present invention, the control information includes instruction information, the instruction information is used to instruct the main chip to perform the preset operation, and the directive command comprises the instruction information.

In an embodiment of the present invention, the control information is a message sent by the main chip using a first application, the control information further includes an identifier of the first application, and the obtaining unit is specifically configured to:
obtain a permission application list, where the permission application list includes an identifier of at least one application that has permission to obtain the current location using the positioning chip; and
when the identifier of the first application is an item in the permission application list, obtain the current location based on the control information.

In an embodiment of the present invention, the control information further includes a time condition, and the obtaining unit is specifically configured to: when a current time meets the time condition, obtain the current location based on the control information.

In an embodiment of the present invention, the positioning chip is a GPS chip, and that the obtaining unit obtains a current location based on the control information includes:
obtaining the current location based on the control information using a GPS.

In an embodiment of the present invention, the positioning chip is a modem chip, and that the obtaining unit obtains a current location based on the control information includes:
obtaining the current location based on the control information using a base station positioning system.

In an embodiment of the present invention, the execution unit is specifically configured to:
wake up a system in the main chip; and/or
output prompt information that is used to indicate that the current location is the preset location; and/or
start a preset application program.

According to a fifth aspect, an embodiment of the present invention further provides a mobile terminal. The mobile terminal may include a positioning chip and a main chip, where the positioning chip includes a first processor, a first memory, and a positioning module, the main chip includes a second processor and a second memory, the first processor is connected to the first memory and the positioning module using a first data cable, the second processor is connected to the second memory and the first processor that is in the positioning chip using a second data cable, the first memory is configured to store program code to be executed by the first processor, and the second memory is configured to store program code to be executed by the second processor;
the second processor is configured to send control information to the first processor, where the control information includes a preset location;
the first processor is configured to: receive the control information sent by the first processor, obtain a current location based on the control information using the positioning module, determine whether the current location matches the preset location, and if the current location matches the preset location, send a command to the main chip; and
the second processor is further configured to: receive the directive command, and perform a preset operation according to the directive command.

In an embodiment of the present invention, the control information includes instruction information, the instruction information is used to instruct the main chip to perform the preset operation, and the directive command comprises the instruction information.

In an embodiment of the present invention, the control information is a message sent by the main chip using a first application, the control information further includes an identifier of the first application, and that the first processor obtains a current location based on the control information using the positioning module includes:
obtaining a permission application list, where the permission application list includes an identifier of at least one application that has permission to obtain the current location using the positioning chip; and
when the identifier of the first application is an item in the permission application list, obtaining the current location based on the control message.

In an embodiment of the present invention, the control information further includes a time condition, and that the first processor obtains a current location based on the control information using the positioning module includes:
when a current time meets the time condition, obtaining the current location based on the control information.

In an embodiment of the present invention, the positioning chip is a GPS chip, and that the first processor obtains a current location based on the control information using the positioning module includes:
obtaining the current location based on the control information using a GPS.

In an embodiment of the present invention, the positioning chip is a modem chip, and that the first processor obtains a current location based on the control information using the positioning module includes:
obtaining the current location based on the control information using a base station positioning system.

In an embodiment of the present invention, the preset operation includes:
waking up a system in the main chip; and/or
outputting prompt information that is used to indicate that the current location is the preset location; and/or
starting a preset application program.

### BRIEF DESCRIPTION OF DRAWINGS

To describe the technical solutions in the embodiments of the present invention or in the prior art more clearly, the following briefly describes the accompanying drawings required for describing the embodiments or the prior art.
FIG. 1 is a schematic architectural diagram of an information processing system according to an embodiment of the present invention;
FIG. 2 is a structural block diagram of a mobile terminal according to an embodiment of the present invention;
FIG. 3 is a schematic flowchart of an information processing method according to an embodiment of the present invention;
FIG. 4 is a schematic structural diagram of a setting interface for a permission application list according to an embodiment of the present invention;
FIG. 5 is a structural block diagram of a positioning chip according to an embodiment of the present invention; and
FIG. 6 is a structural block diagram of another mobile terminal according to an embodiment of the present invention.

### DESCRIPTION OF EMBODIMENTS

The following clearly describes the technical solutions in the embodiments of the present invention with reference to the accompanying drawings in the embodiments of the present invention.

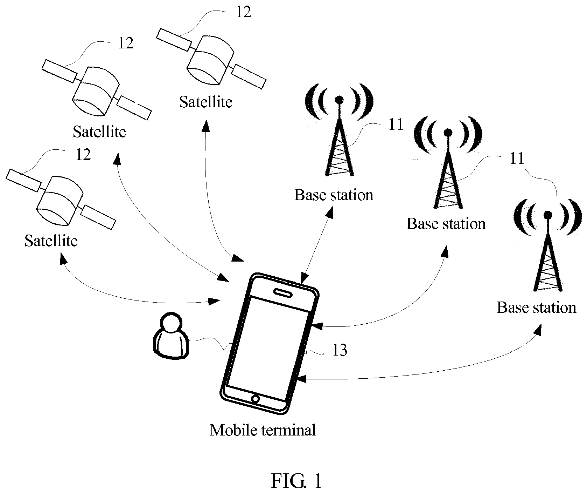

FIG. 1 is a structural block diagram of an information processing system according to an embodiment of the present invention. As shown in FIG. 1, this embodiment of the present invention may be implemented based on the information processing system. The information processing system may include a base station positioning system 11 and/or a satellite positioning system 12, and a mobile terminal 13 (which may also be expressed as "a positioning chip" in this application). Optionally, the information processing system may further include another positioning system 14 (for example, a Wi-Fi positioning system including a plurality of Wi-Fi (English: Wireless Fidelity) nodes, or a Bluetooth beacon positioning system), another positioning beacon (for example, a Bluetooth beacon or an NFC (English: Near Field Communication) tag) and/or a network infrastructure (for example, a network server), and the like. The mobile terminal 13 may collect a signal transmitted by the base station positioning system 11 or the satellite positioning system 12, and determine location/zone bit information based on the collected signal. The satellite positioning system 12 may be a Global Positioning System (English: Global Positioning System, GPS for short), a Chinese BeiDou Navigation Satellite System (English: BeiDou Navigation Satellite System, BDS for short), and/or another satellite-based positioning system. The mobile terminal may be a smartphone, a tablet computer, a personal digital assistant (PDA), a notebook computer, a smart band, smart glasses, and/or a similar device. The base station positioning system includes at least one base station. A base station positioning service is also referred to as a mobile location-based service (Location Based Service, LBS). In the base station positioning service, location information (longitude and latitude coordinates) of the mobile terminal 13 is obtained based on a cellular base station using a network (for example, a GSM network) of a telecommunications operator, and a location service is provided, with support of an electronic map platform, for a user of the mobile terminal 13. One or more Bluetooth beacons may transmit a signal. The mobile terminal (or the positioning chip) may perform positioning based on the received signal. A mobile terminal with an NFC function (or a positioning chip including an NFC function) performs near field communication with an NFC tag disposed at a fixed location, to obtain location information stored in the NFC tag. Optionally, in this application, positioning may be performed based on the base station positioning system 11 or the satellite positioning system 12, and the positioning may be assisted by another positioning system (for example, a Wi-Fi positioning system, a Bluetooth beacon, or an NFC tag), to enhance determining of the location/zone bit information.

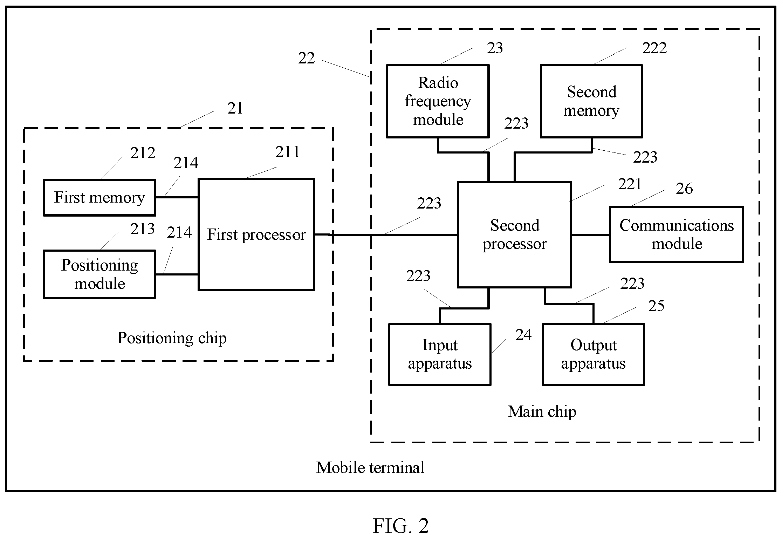

FIG. 2 is a structural block diagram of a mobile terminal according to an embodiment of the present invention. The embodiments of the present invention may be implemented based on the mobile terminal. The mobile terminal may include a positioning chip 21 and a main chip 22. The positioning chip 21 may include a first processor 211, a first memory 212, and a positioning module 213. The main chip 22 may include a second processor 221 and a second memory 222. The first processor 211 is connected to the first memory 212 and the positioning module 213 using a first data cable 214, and the second processor 221 is connected to the second memory 222 and the first processor 211 that is in the positioning chip 21 using a second data cable 223. It may be understood that the positioning chip 21 may be one or a combination of more of a GPS chip, a DBS chip, a modem chip, a Wi-Fi chip, a Bluetooth chip, an NFC chip, a Bluetooth/FM (English: Frequency Modulation, frequency modulation)/Wi-Fi/GPS four-in-one chip, and the like. The positioning chip 21 may receive a signal transmitted by at least one of a base station positioning system, a satellite positioning system, a Wi-Fi positioning system, a Bluetooth beacon, an NFC tag, or the like, and determine location/zone bit information based on the collected signal. The first processor 211 in the positioning chip 21 may invoke instruction code stored in the first memory 212, and the second processor 221 in the main chip 22 may invoke instruction code stored in the second memory 222, to implement an information processing method in this application.

It may be understood that the mobile terminal further includes a radio frequency module 23, an input apparatus 24, an output apparatus 25, and another communications module 26 in addition to a communications module included in the positioning chip. The second processor 221 may be connected to the radio frequency module 23, the input apparatus 24, the output apparatus 25, and the communications module 26 using the second data cable 223. It may be understood that the radio frequency module 23, the input apparatus 24, the output apparatus 25, and the communications module 26 may alternatively be integrated into the main chip 22.

The second processor 221 is a control center of the mobile terminal and is connected to all parts of the entire mobile terminal using various interfaces and lines. By running or executing a software program and/or a software module stored in the second memory 222, and by invoking data stored in the second memory 222, the second processor 221 performs various functions of the mobile terminal and processes data, to perform overall monitoring on the mobile terminal. The first processor 211 is a control center of the positioning chip and is connected to all parts of the positioning chip using an interface. By running or executing data stored in the first memory 212, the first processor 211 implements the information processing method described in the present invention. Optionally, the second processor 221 may include one or more processors or processing modules. Preferably, an application processor and a modem processor may be integrated into the second processor 221. The application processor mainly processes an operating system, a user interface, an application program, and the like. The modem processor mainly processes wireless communication. In this embodiment of the present invention, the second processor may further include a graphics processing unit GPU. The GPU alone and a dedicated circuit board and an accessory component may form a graphics card, or a single GPU chip may be directly built into a main board or built into a chip of a main board, or may be built into a CPU to form a system on chip (System on Chip, SoC). This is not specifically limited in the present invention.

The first memory 212 and the second memory 222 each may be configured to store a software program and a software module. The first processor 211 runs the software program and the software module stored in the first memory 212, and the second processor 221 runs the software program stored in the second memory 222, to perform various functional applications of the mobile terminal and process information. The first memory or the second memory mainly includes a program storage area and a data storage area. The program storage area may store an operating system, and an application program required by at least one function, for example, a sound playing program or an image playing program. The data storage area may store data (for example, audio data or a phonebook) created based on use of the mobile terminal, and the like. In a specific implementation of the present invention, the first memory 212 or the second memory 222 may include a volatile memory, for example, a nonvolatile random access memory (Nonvolatile Random Access Memory, NVRAM for short), a phase change random access memory (Phase Change RAM, PRAM for short), or a magneto-resistive random access memory (Magneto-resistive RAM, MRAM for short); or may include a nonvolatile memory, for example, at least one disk storage device, an electrically erasable programmable read-only memory (Electrically Erasable Programmable Read-Only Memory, EEPROM for short), or a flash storage device such as a NOR flash memory (NOR flash memory) or a NAND flash memory (NAND flash memory).

The radio frequency module 23 is configured to receive and send information, or receive and send a signal during a call. For example, after receiving downlink information from a base station, the radio frequency module 23 sends the downlink information to a processing unit for processing, and in addition, sends related uplink data to the base station. Generally, the radio frequency module includes a known circuit for performing these functions, and includes but is not limited to an antenna system, a radio frequency transceiver, one or more amplifiers, a tuner, one or more oscillators, a digital signal processor, a codec (Codec) chip set, a subscriber identity module (SIM) card, a memory, and the like.

The input apparatus 24 is configured to implement interaction between a user and the mobile terminal and/or enter information to the mobile terminal. For example, the input apparatus 24 may receive digit or character information entered by the user, to generate signal input related to a user setting or function control. In a specific implementation of the present invention, the input apparatus 24 may be a touch panel, or may be another human-machine interaction interface such as a physical input button or a microphone, or may be another external information capturing apparatus such as a camera.

The output apparatus 25 may include but is not limited to an image output unit, a sound output unit, and a touch output unit. The image output unit is configured to output a text, a picture, and/or a video. The image output unit may include a display. In FIG. 2, the input apparatus 24 and the output apparatus 25 serve as two independent components to implement input and output functions of the mobile terminal. However, in some embodiments, the touch panel and the display may be integrated to implement the input and output functions of the mobile terminal.

The communications module 26 is configured to establish a communications channel, so that the mobile terminal is connected to a communication peer using the communications channel, thereby implementing data interaction between the mobile terminal and the communication peer. The communications module may include a wireless communications module such as a wireless local area network (Wireless Local Area Network, WLAN for short) module, a Bluetooth module, a near field communication (Near Field Communication, NFC for short) module, or a baseband (Baseband) module, and a wired communications module such as an Ethernet, a universal serial bus (Universal Serial Bus, USB for short), or a lightning (Lightning, currently used by Apple for a device such as an iPhone5/5s/5c) interface.

Specifically, the second processor 221 is configured to send control information to the positioning chip 21, where the control information includes a preset location.

The first processor 211 is configured to: receive the control information sent by the main chip 22, obtain a current location based on the control information using the positioning module, determine whether the current location matches the preset location, and if the current location matches the preset location, send a command to the main chip 22.

The second processor is further configured to: receive the directive command, and perform a preset operation according to the directive command.

In an embodiment of the present invention, the control information includes instruction information, the instruction information is used to instruct the main chip to perform the preset operation, and the directive command comprises the instruction information.

In an embodiment of the present invention, the control information is a message sent by the main chip using a first application, the control information further includes an identifier of the first application, and that the first processor 211 obtains a current location based on the control information using the positioning module includes: obtaining a permission application list, where the permission application list includes an identifier of at least one application that has permission to obtain the current location using the positioning chip; and when the identifier of the first application is an item in the permission application list, obtaining the current location based on the control message.

In an embodiment of the present invention, the control information further includes a time condition, and that the first processor 211 obtains a current location based on the control information using the positioning module includes: when a current time meets the time condition, obtaining the current location based on the control information.

In an embodiment of the present invention, the positioning chip is a GPS chip, and that the first processor 211 obtains a current location based on the control information using the positioning module includes: obtaining the current location based on the control information using a GPS.

In an embodiment of the present invention, the positioning chip is a modem chip, and that the first processor 211 obtains a current location based on the control information using the positioning module includes: obtaining the current location based on the control information using a base station positioning system.

In an embodiment of the present invention, the preset operation includes: waking up a system in the main chip; and/or outputting prompt information that is used to indicate that the current location is the preset location; and/or starting a preset application program.

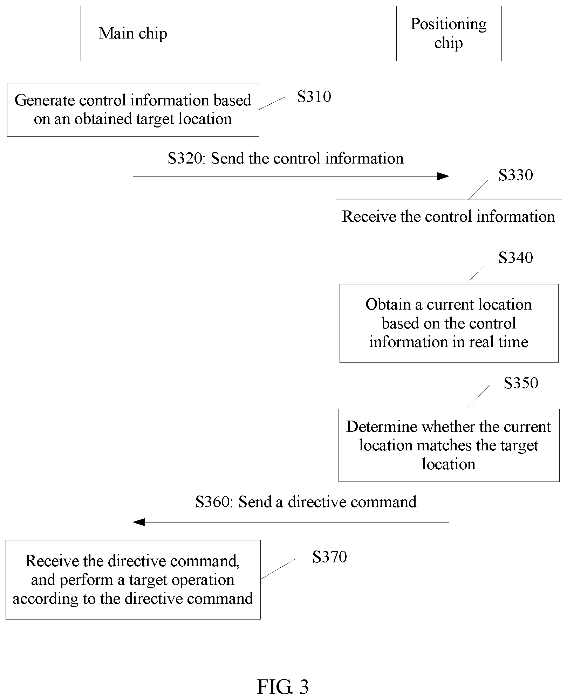

Functions of the units or modules in the mobile terminal in the present invention are intended to implement an information processing method shown in FIG. 3. For specific implementations of the functions of the units or modules, refer to the information processing method shown in FIG. 3. Details are not described herein.

FIG. 3 is a schematic flowchart of an information processing method according to an embodiment of the present invention. As shown in FIG. 3, the information processing method may include the following steps.

Step S310: A main chip generates control information based on an obtained preset location.

A positioning chip and the main chip are disposed in a same mobile terminal. The control information includes the preset location. Optionally, the control information may be the preset location. A user of the mobile terminal may enter geographical coordinates of the preset location into a user interface provided by the mobile terminal, or may enter a location name of the preset location into a user interface provided by the mobile terminal. The main chip obtains the geographical coordinates of the preset location with reference to map data. The preset location may be geographical coordinates (longitude, latitude) such as (114.058, 22.065), or may be a regional location (a range of geographical coordinates). For example, the mobile terminal may be set to trigger a preset operation (prompting stop arrival) when the mobile terminal is located at the preset location (a first subway station).

In an embodiment of the present invention, the control information may further include instruction information, and the instruction information is used to instruct the main chip to perform the preset operation. It may be understood that a correspondence between the instruction information and the preset operation may be set in the main chip. The instruction information may be an identifier used to instruct the main chip to perform the preset operation. The main chip may identify, based on the instruction information, the preset operation corresponding to the instruction information. The instruction information may alternatively be a directive command for the preset operation, and the directive command for the preset operation is used to instruct the main chip to perform the preset operation.

It may be understood that the control information may include a plurality of preset locations and instruction information corresponding to the plurality of preset locations. Different instruction information may be used to instruct the mobile terminal to perform different preset operations. For example, a relationship between a preset location, instruction information, and a preset operation may be shown in the following table:

| Preset location | Instruction information | Preset operation |
|---|---|---|
| "First subway station" | Identifier 1 | Prompt stop arrival |
| "First cell" | Identifier 2 | Open a "WeChat" application |
| "First office building" | Identifier 3 | Set to a silent mode |
| "First shopping mall" | Identifier 4 | Open Alipay |

Step S320: The main chip sends the control information to a positioning chip.

Optionally, after the main chip sends the control information to the positioning chip, a system in the main chip or a function module configured to perform the information processing method in the main chip may sleep, thereby reducing power consumption of the mobile terminal.

Step S330: The positioning chip receives the control information sent by the main chip.

Step S340: The positioning chip obtains a current location based on the control information.

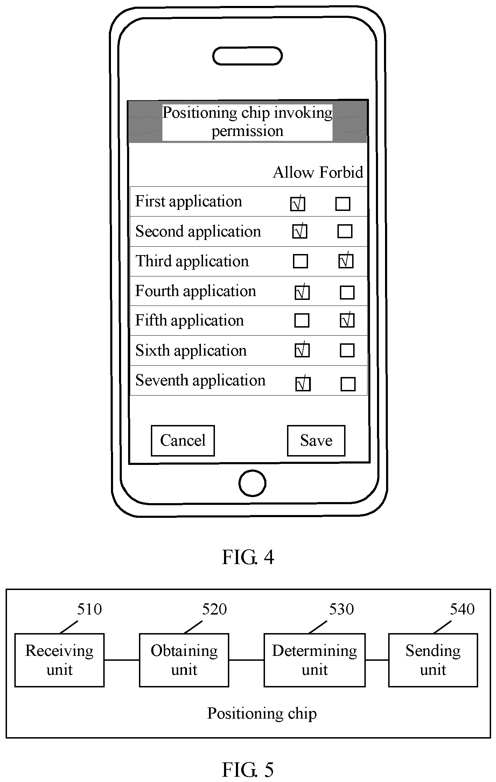

In an embodiment of the present invention, when the control information is a message sent by the main chip using a first application, the control information may further include an identifier of the first application. The positioning chip may obtain a permission application list stored in the positioning chip, or obtain a permission application list stored in the main chip. The permission application list may include an identifier of at least one application that has permission to obtain the current location using the positioning chip. The application identifier is used to distinguish between application programs in the mobile terminal. The user of the mobile terminal may set, using a setting interface that is for the permission application list and that is provided by the main chip, an application that can invoke the positioning chip. FIG. 4 is a schematic structural diagram of a setting interface for a permission application list according to an embodiment of the present invention. The user of the mobile terminal can select an "Allow" option in a target-application menu bar, so that the first application is granted with permission to access the positioning chip; or can select a "Forbid" option in a target-application menu bar, so that the first application is not granted with permission to access the positioning chip.

Correspondingly, an implementation of the obtaining, by the positioning chip, a current location based on the control information may be as follows: The positioning chip determines, whether the identifier of the first application is an item in the permission application list. If the identifier of the first application is an item in the permission application list, the first application has permission to invoke the positioning chip, and in this case, the positioning chip may obtain the current location. If the identifier of the first application is not an item in the permission application list, the first application has no permission to invoke the positioning chip, and a procedure may be ended, or prompt information or a prompt instruction may be sent to the main chip to prompt a prompt message indicating that the first application has no permission to invoke the positioning chip.

In an embodiment of the present invention, when the control information is a message sent by the main chip using a first application, the control information may further include an identifier of the first application. Before the main chip performs step S320, the main chip may obtain a permission application list, and determine whether the identifier of the first application is an item in the permission application list. If the identifier of the first application is an item in the permission application list, the first application has permission to invoke the positioning chip. If the identifier of the first application is not an item in the permission application list, the first application has no permission to invoke the positioning chip, and a procedure may be ended, or a prompt message indicating that the first application has no permission to invoke the positioning chip may be output.

In an embodiment of the present invention, the control information further includes a time condition. It may be understood that the main chip may set the time condition, so that when a current time meets the time condition, the positioning chip is triggered to obtain the current location based on the control information.

For example, the user of the mobile terminal usually works on workdays, and a bus station near a work place is a "first bus station." The user may perform setting in a user interface on the mobile terminal to enable the mobile terminal to remind the user to get off upon stop arrival when a location is the "first bus station" in a commuting time period (for example, 7 a.m. to 9 a.m. from Monday to Friday) on workdays. When the current time meets the time condition (7 a.m. to 9 a.m. from Monday to Friday), the positioning chip is triggered to obtain the current location, thereby meeting diversified requirements of the user and improving user experience.

It may be understood that the positioning chip may be one or a combination of more of a GPS chip, a DBS chip, a modem chip, a Wi-Fi chip, a Bluetooth chip, or a Bluetooth/FM (English: Frequency Modulation, frequency modulation)/Wi-Fi/GPS four-in-one chip, and the like. After receiving the control information, the positioning chip obtains, through parsing, the preset location, the instruction information, the identifier of the first application and/or the time condition, and the like that are included in the control information. Then, when the identifier of the first application and/or the time condition meets a condition, the positioning chip may receive a signal transmitted by a GPS, a BDS positioning system, a mobile positioning system of a base station, a Bluetooth beacon, and/or an NFC tag, and the like, and calculate the current location based on the received signal, to obtain the current location.

Step S350: The positioning chip determines whether the current location matches the preset location.

It may be understood that when the preset location is specific geographical coordinates, a method for determining, by the positioning chip, whether the current location matches the preset location may be as follows: The positioning chip determines whether geographical coordinates of the current location are the same as the geographical coordinates of the preset location, or the positioning chip determines whether the geographical coordinates of the current location are within a location range that has an origin point at the geographical coordinates of the preset location and has a radius of a radius threshold (for example, 2 m). If the geographical coordinates of the current location are the same as the geographical coordinates of the preset location, or the geographical coordinates of the current location are within the location range, the current location matches the preset location, and the positioning chip may perform step S360; or if the geographical coordinates of the current location are not the same as the geographical coordinates of the preset location, or the geographical coordinates of the current location are out of the location range, the current location does not match the preset location, and the positioning chip may perform step S340 to re-obtain a current location.

When the preset location is a location area (a range of geographical coordinates), for example, "Huawei Base", a method for determining, by the positioning chip, whether the current location matches the preset location may be as follows: The positioning chip determines whether geographical coordinates of the current location are within the location area (the range of geographical coordinates). If the geographical coordinates of the current location are within the location area, the current location matches the preset location, and the positioning chip may perform step S360; or if geographical coordinates of the current location are out of the location area, the current location does not match the preset location, and the positioning chip may perform step S340 to re-obtain a current location, until an obtained current location matches the preset location.

Step S360: The positioning chip sends a directive command to the main chip.

Specifically, when the current location matches the preset location, the positioning chip may send the directive command to the main chip. The directive command may be information indicating that the current location matches the preset location.

Optionally, when the control information includes instruction information, the directive command may be the instruction information. When the instruction information is a directive command for the preset operation, the directive command may be the directive command for the preset operation.

Step S370: The main chip receives the directive command, and performs a preset operation according to the directive command.

Specifically, when the main chip receives the directive command, the current location is the preset location, and the main chip may perform the preset operation based on the received directive command.

Optionally, when the control information includes instruction information, the main chip may identify, based on a correspondence between prestored instruction information and a preset operation, a preset operation corresponding to the instruction information, and then perform the preset operation. Optionally, the instruction information may be a directive command for the preset operation, and the main chip may perform the preset operation in response to the directive command for the preset operation.

The preset operation may be outputting prompt information that is used to indicate that the current location is the preset location. An implementation of the outputting prompt information that is used to indicate that the current location is the preset location may include but is not limited to at least one of the following: displaying, on a display screen, a text, a picture, or video information used to indicate that the current location is the preset location; playing audio information indicating that the current location is the preset location; vibrating; turning on an indicator; and so on. For example, when the positioning chip detects that the user of the mobile terminal arrives at the preset location, the positioning chip sends the directive command to the main chip, and after receiving the directive command, the main chip notifies the user that the user has arrived at the preset location. In this way, an application in the main chip can be prevented from obtaining location information, so that user information security is protected. In addition, the user can be prompted, to avoid the user of the mobile terminal from missing the preset location.

Optionally, after the main chip sends the control information, a system in the main chip or a function module that performs the information processing method in the main chip may enter a sleep state. Alternatively, the preset operation may be waking up the system in the main chip or the function module that performs the information processing method in the main chip, and outputting prompt information that is used to indicate that the current location is the preset location. Correspondingly, after receiving the directive command sent by the positioning chip, the main chip wakes up the system in the main chip or the function module that performs the information processing method in the main chip. In this way, power consumption of the mobile terminal can be reduced. In addition, the user can be prompted when the user of the mobile terminal arrives at the specified preset location, thereby improving user experience.

Alternatively, the preset operation may be starting a preset application program. For example, the user of the mobile terminal may perform setting to enable the mobile terminal to open WeChat (the preset operation) when the mobile terminal is located at home (the preset location). When the positioning chip detects that the current location is home, an electronic terminal may open WeChat to receive a WeChat message.

It may be understood that the preset operation may alternatively be sending a specified email or specified information to a target contact, downloading or caching specified video content, an operation of powering on/off, and/or entering a silent mode or an airplane mode, and the like. This is not limited in the present invention.

In this embodiment of the present invention, the main chip sends the control information including the preset location to the positioning chip; the positioning chip receives the control information sent by the main chip; the positioning chip obtains the current location based on the control information, determines whether the current location matches the preset location, and sends the directive command to the main chip when the current location matches the preset location; and after the main chip receives the directive command, the main chip performs the preset operation according to the directive command. In this method, instead of the current location, the positioning chip sends, to the main chip, the directive command indicating that the current location is the preset location. In this way, the main chip is prevented from obtaining the current location, and therefore an application running in the main chip is prevented from obtaining location information of the mobile terminal, and user information security is protected.

In addition, after the main chip sends the control information to the positioning chip, the system in the main chip may sleep, until the directive command sent by the positioning chip is received. After receiving the directive command sent by the positioning chip, the main chip changes from a sleep state to a wake-up state. In this way, power consumption of the mobile terminal is reduced.

FIG. 5 is a structural block diagram of a positioning chip according to an embodiment of the present invention. As shown in FIG. 5, the positioning chip includes:
a receiving unit 510, configured to receive control information sent by a main chip, where the control information includes a preset location;
an obtaining unit 520, configured to obtain a current location based on the control information;
a determining unit 530, configured to determine whether the current location matches the preset location; and
a sending unit 540, configured to: when the current location matches the preset location, send a directive command to the main chip, so that the main chip performs a preset operation according to the directive command.

The positioning chip and the main chip are disposed in a same mobile terminal.

In an embodiment of the present invention, the control information includes instruction information, the instruction information is used to instruct the main chip to perform the preset operation, and the directive command comprises the instruction information.

In an embodiment of the present invention, the control information is a message sent by the main chip using a first application, the control information further includes an identifier of the first application, and the obtaining unit is specifically configured to:
obtain a permission application list, where the permission application list includes an identifier of at least one application that has permission to obtain the current location using the positioning chip; and
when the identifier of the first application is an item in the permission application list, obtain the current location based on the control information.

In an embodiment of the present invention, the control information further includes a time condition, and the obtaining unit is specifically configured to: when a current time meets the time condition, obtain the current location based on the control information.

In an embodiment of the present invention, the positioning chip is a GPS chip, and that the obtaining unit obtains a current location based on the control information includes:
obtaining the current location based on the control information using a GPS.

In an embodiment of the present invention, the positioning chip is a modem chip, and that the obtaining unit obtains a current location based on the control information includes:
obtaining the current location based on the control information using a base station positioning system.

In an embodiment of the present invention, the preset operation includes: waking up a system in the main chip; and/or outputting prompt information that is used to indicate that the current location is the preset location; and/or starting a preset application program.

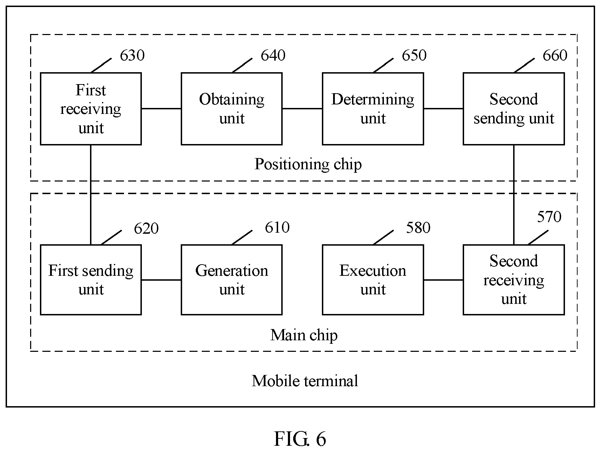

FIG. 6 is a structural block diagram of another mobile terminal according to an embodiment of the present invention. As shown in FIG. 6, the mobile terminal may include:
a generation unit 610, configured to generate control information based on a received preset location, where the control information includes the preset location;
a first sending unit 620, configured to send the control information to a positioning chip;
a first receiving unit 630, configured to receive the control information sent by a main chip;
an obtaining unit 640, configured to obtain a current location based on the control information;
a determining unit 650, configured to determine whether the current location matches the preset location;
a second sending unit 660, configured to: when the current location matches the preset location a directive command to the main chip;
a second receiving unit 670, configured to receive the directive command; and
an execution unit 680, configured to perform a preset operation according to the directive command.

The positioning chip and the main chip are disposed in a same mobile terminal.

In an embodiment of the present invention, the control information includes instruction information, the instruction information is used to instruct the main chip to perform the preset operation, and the directive command comprises the instruction information.

In an embodiment of the present invention, the control information is a message sent by the main chip using a first application, the control information further includes an identifier of the first application, and the obtaining unit 640 is specifically configured to: obtain a permission application list, where the permission application list includes an identifier of at least one application that has permission to obtain the current location using the positioning chip; and when the identifier of the first application is an item in the permission application list, obtain the current location based on the control information.

In an embodiment of the present invention, the control information further includes a time condition, and the obtaining unit 640 is specifically configured to: when a current time meets the time condition, obtain the current location based on the control information.

In an embodiment of the present invention, the positioning chip is a GPS chip, and that the obtaining unit 640 obtains a current location based on the control information includes: obtaining the current location based on the control information using a GPS.

In an embodiment of the present invention, the positioning chip is a modem chip, and that the obtaining unit 640 obtains a current location based on the control information includes: obtaining the current location based on the control information using a base station positioning system.

In an embodiment of the present invention, the execution unit 670 is specifically configured to:
wake up a system in the main chip; and/or output prompt information that is used to indicate that the current location is the preset location; and/or start a preset application program.

The technical terms used in the embodiments of the present invention are merely used to describe specific embodiments, but are not intended to limit the present invention. In this specification, singular forms "one", "this", and "the" are intended to simultaneously include a plural form, unless otherwise specified in the context clearly. Further, the term "include" and/or "contain" used in this specification specifies presence of the features, entirety, steps, operations, elements and/or components, but does not exclude presence or addition of one or more of other features, entirety, steps, operations, elements, and/or components.

In the appended claims, the corresponding structures, materials, actions, and equivalent forms (if any) of all apparatuses or steps and function elements are intended to include any structure, material, or action that is used to perform the function with reference to other explicitly required elements. The descriptions of the present invention are provided for the purpose of the embodiments and the descriptions, but are not intended to be exhaustive or limit the present invention to the disclosed form.

## Claims

1. An information processing method, comprising:
receiving, by a positioning chip, control information sent by a main chip , wherein the control information comprises a preset location;
obtaining, by the positioning chip, a current location based on the control information, and determining whether the current location matches the preset location; and
in response to a determination that the current location matches the preset location, sending, by the positioning chip, a command to the main chip, wherein the command instructs the main chip performs a preset operation according to the command.

2. The method according to claim 1, wherein the control information comprises instruction information instruct the main chip to perform the preset operation, and the command comprises the instruction information.

3. The method according to claim 1, wherein the control information is a message sent by the main chip using a first application, the control information further comprises an identifier of the first application, and the obtaining, by the positioning chip , a current location based on the control information comprises:
obtaining, by the positioning chip , a permission application list, wherein the permission application list comprises an identifier of at least one application that has permission to obtain the current location using the positioning chip; and
obtaining, by the positioning chip , the current location based on the control information when the identifier of the first application is an item in the permission application list.

4. The method according to claim 1, wherein the control information further comprises a time condition, and the obtaining, by the positioning chip , a current location based on the control information comprises:
obtaining, by the positioning chip , the current location based on the control information when a current time meets the time condition.

5. The method according to any one of claims 1 to 4, wherein the positioning chip is a Global Positioning System (Global Positioning System, GPS) chip, and the obtaining, by the positioning chip , a current location based on the control information comprises:
obtaining, by the positioning chip , the current location based on the control information using the GPS chip.

6. The method according to any one of claims 1 to 4, wherein the positioning chip is a modem chip, and the obtaining, by the positioning chip, a current location based on the control information comprises:
obtaining, by the positioning chip, the current location based on the control information using a base station positioning system.

7. The method according to any one of claims 1 to 6, wherein the preset operation comprises at least one of:
waking up a system in the main chip;
outputting prompt information that is used to indicate that the current location is the preset location; or
starting a preset application program.

8. A positioning chip, comprising a first processor, a first memory, and a positioning module, wherein the first processor is coupled to the first memory, the positioning module, and a main chip, the memory storing instructions, and the instructions instruct the first processor to:
receive control information sent by the main chip, wherein the control information comprises a preset location;
obtain a current location based on the control information using the positioning module;
determine whether the current location matches the preset location; and
send a command to the main chip when the current location matches the preset location, wherein the command instructs the main chip performs a preset operation according to the command, wherein
the positioning chip and the main chip are disposed in a same mobile terminal.

9. The positioning chip according to claim 8, wherein the control information comprises instruction information, the instruction information is used to instruct the main chip to perform the preset operation, and the command comprises the instruction information.

10. The positioning chip according to claim 8, wherein the control information is a message sent by the main chip using a first application, the control information further comprises an identifier of the first application, and the instructions further instruct the first processor to:
obtain a permission application list, wherein the permission application list comprises an identifier of at least one application that has permission to obtain the current location using the positioning chip; and
obtain the current location based on the control information using the positioning module when the identifier of the first application is an item in the permission application list.

11. The positioning chip according to claim 8, wherein the control information further comprises a time condition, and the instructions further instruct the first processor to:
obtain the current location based on the control information using the positioning module when a current time meets the time condition.

12. The positioning chip according to any one of claims 8 to 11, wherein the positioning chip is a GPS chip, and the instructions further instruct the first processor to:
obtain the current location based on the control information using the GPS chip.

13. The positioning chip according to any one of claims 8 to 11, wherein the positioning chip is a modem chip, and the instructions further instruct the first processor to:
obtain the current location based on the control information using a base station positioning system.

14. The positioning chip according to any one of claims 7 to 13, wherein the preset operation comprises at least one of:
waking up a system in the main chip;
outputting prompt information that is used to indicate that the current location is the preset location; or
starting a preset application program.

15. A mobile terminal, comprising a positioning chip and a main chip, wherein the positioning chip comprises a first processor, a first memory, and a positioning module, the main chip comprises a second processor and a second memory, the first processor is coupled to the first memory and the positioning module using a first data cable,the second processor is coupled to the second memory and the first processor that is in the positioning chip using a second data cable,the first memory is configured to store program code to be executed by the first processor, and the second memory is configured to store program code to be executed by the second processor;
the second processor is configured to send control information to the first processor, wherein the control information comprises a preset location;
the first processor is configured to: receive the control information sent by the first processor, obtain a current location based on the control information using the positioning module, determine whether the current location matches the preset location, and send a command to the main chip when the current location matches the preset location; and
the second processor is further configured to: receive the command, and perform a preset operation according to the command.

16. The mobile terminal according to claim 1, wherein the control information comprises instruction information, the instruction information is used to instruct the main chip to perform the preset operation, and the command comprises the instruction information.

17. The mobile terminal according to claim 16, wherein the control information is a message sent by the main chip using a first application, the control information further comprises an identifier of the first application, and that the first processor performs the operation of obtaining a current location based on the control information using the positioning module comprises:
obtaining a permission application list, wherein the permission application list comprises an identifier of at least one application that has permission to obtain the current location using the positioning chip; and
obtaining the current location based on the control information when the identifier of the first application is an item in the permission application list.

18. The mobile terminal according to claim 16, wherein the control information further comprises a time condition, and that the first processor performs the operation of obtaining a current location based on the control information using the positioning module comprises:
obtaining the current location based on the control information when a current time meets the time condition.

19. The mobile terminal according to any one of claims 16 to 18, wherein the positioning chip is a GPS chip, and that the first processor performs the operation of obtaining a current location based on the control information using the positioning module comprises:
obtaining the current location based on the control information using the GPS chip.

20. The mobile terminal according to any one of claims 16 to 18, wherein the positioning chip is a modem chip, and that the first processor performs the operation of obtaining a current location based on the control information using the positioning module comprises:
obtaining the current location based on the control information using a base station positioning system.

21. The mobile terminal according to any one of claims 16 to 20, wherein the preset operation comprises at least one of:
waking up a system in the main chip;
outputting prompt information that is used to indicate that the current location is the preset location; or
starting a preset application program.
